(19) Europäisches Patentamt / European Patent Office / Office européen des brevets

(11) **EP 4 078 215 B1**

(12) **EUROPÄISCHE PATENTSCHRIFT**

(45) Veröffentlichungstag und Bekanntmachung des Hinweises auf die Patenterteilung:
**30.07.2025   Patentblatt 2025/31**

(21) Anmeldenummer: **21805938.4**

(22) Anmeldetag: **03.11.2021**

(51) Internationale Patentklassifikation (IPC):
**G01S 7/48** *(2006.01)*     **G01S 7/4865** *(2020.01)*
**H04W 12/08** *(2021.01)*     **B60R 25/00** *(2013.01)*
**H04W 12/122** *(2021.01)*     **G01S 13/84** *(2006.01)*
**G07C 9/00** *(2020.01)*

(52) Gemeinsame Patentklassifikation (CPC):
**G01S 13/84; G07C 9/00309; H04W 12/122;**
B60R 25/00; G07C 2009/00555

(86) Internationale Anmeldenummer:
**PCT/EP2021/080524**

(87) Internationale Veröffentlichungsnummer:
**WO 2022/096514 (12.05.2022 Gazette 2022/19)**

(54) **VERFAHREN ZUR ERKENNUNG EINES RELAYANGRIFFS**

PROCEDURE FOR THE DETECTION OF A RELAY ATTACK

PROCÉDURE DE DÉTECTION D'UNE ATTAQUE DE RELAIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **04.11.2020   PCT/EP2020/081015**

(43) Veröffentlichungstag der Anmeldung:
**26.10.2022   Patentblatt 2022/43**

(73) Patentinhaber: **Lambda: 4 Entwicklungen GmbH**
**22299 Hamburg (DE)**

(72) Erfinder: **REIMANN, Rönne**
**22769 Hamburg (DE)**

(74) Vertreter: **Raffay & Fleck**
**Patentanwälte**
**Stephansplatz 2-6**
**20354 Hamburg (DE)**

(56) Entgegenhaltungen:
EP-A1- 1 650 581        EP-A1- 3 564 703
WO-A1-2019/238789        WO-A1-2020/156939

**Beschreibung**

Die Erfindung betrifft ein Verfahren zur Erkennung und/oder Verhinderung von Relayangriffen sowie ein Zugangssystem eingerichtet zur Durchführung eines solchen Verfahrens.

Es sind zahlreiche Verfahren zur Erkennung von Relayangriffen oder Verhinderung, insbesondere Man-in-the-middle oder auch Wrap-around-attack oder phasemanipulation-attack oder Early-detect-late-commit Angriffen, bekannt.

Diese Verfahren erfordern in der Regel komplizierte und aufwendige Hardware. Es ist Aufgabe der Erfindung, eine einfache, schnelle und/oder zuverlässige Erkennung von Relayangriffen zu ermöglichen.

Zudem ist es aus der EP 3 564 703 A1 bekannt, die Phasenlage eines empfangenen Signals zu bestimmen und mit einer auf andere Weise bestimmten Phasenlage zu vergleichen und bei Überschreiten einer vorbestimmten Abweichung einen Relayangriff anzunehmen. Sie offenbart somit den Vergleich einer zeitlichen Lage oder Phasenlage mit einer vorbestimmten oder mit anderen Methoden berechneten zeitlichen Lage und/oder Phasenlage und nicht den Vergleich mit einer Laufzeit. Zudem ist die zeitliche Lage nicht eine Laufzeit, sondern ein Äquivalent zur Phasenlage.

Es wurde überraschend festgestellt, dass die aus Entfernungsmessung gewonnen Entfernungen bei der Verwendung handelsüblicher Transceiver wie z.B. der schon etwas ältere cc2500 oder der aktuelle cc26xx von Texas Instruments oder der Kw35/36/37/38 von NXP oder der Dialog DA1469x von Dialog abhängig sind von der zur Entfernungsbestimmung verwendeten Frequenz.

Erkannt wurde auch, dass sich die durch Phasenmessungen und Laufzeitmessungen gewonnen Messwerte über die Veränderung der zur Messung verwendeten Frequenz gleichlaufend und beinahe proportional verändern. Daraus wurde erkannt, dass eine Abweichung der Veränderungen einen nicht natürlichen Ursprung hat und einen Relayangriff erkennen lässt. Dazu, so wurde erkannt, ist es nicht notwendig, die Entfernungen zu berechnen, sondern können Messwerte mit nur wenig oder keiner Verarbeitung verglichen werden und so einfach und zuverlässig ein Relayangriff erkannt werden, was bevorzugt wird.

Gelöst wird die Aufgabe erfindungsgemäß durch ein Verfahren zur Erkennung eines Relayangriffs nach Anspruch 1 sowie ein Zugangssystem nach Anspruch 13. Die Ansprüche 2 bis 12 sowie respektive 14 betreffen ferner weitergehende vorteilhafte Ausführungsformen des erfindungsgemäßen Verfahrens bzw. des erfindungsgemäßen Zugangssystems.

In einem erfindungsgemäßen Verfahren können zwischen einem ersten und einem zweiten Objekt Funksignale mit unterschiedlichen Frequenzen übertragen werden und an diesen Funksignalen Phasenmessungen und Laufzeitmessungen (Pulslaufzeitmessungen, ToF) vorgenommen werden, wobei die Spanne der Frequenzen der Funksignale, an denen Laufzeitmessungen vorgenommen werden, und die Spanne der Frequenzen der Funksignale, an denen Phasenmessungen vorgenommen werden, eine Überlappung in einem Frequenzintervall aufweisen, insbesondere identisch sind, und in diesem Frequenzintervall die Veränderung der Phasenmessungen bei Veränderung der Frequenz oder die Veränderung der Phasenverschiebungen bei Veränderung der Frequenz mit den Signallaufmessungen oder deren Veränderung bei Änderung der Frequenz verglichen wird und wobei bei einer Überschreitung einer vorbestimmten oder aus Messungen an den Funksignalen bestimmten Abweichung, insbesondere von einem vorbestimmten oder aus Messungen an den Funksignalen bestimmten Wert, ein Relayangriff angenommen wird und/oder ein Zugang oder eine Freigabe verwehrt wird, eine angefragte Handlung oder Aktion nicht vorgenommen und/oder eine Alarmierung oder Sperrung vorgenommen wird und/oder wobei bei Unterschreitung der vorbestimmten oder aus Messungen, insbesondere Signallaufmessungen, bestimmten Abweichung, insbesondere von einem vorbestimmten oder aus Messungen an den Funksignalen bestimmten Wert, das Nichtvorhandensein eines Relayangriff angenommen wird, der Zugang oder die Freigabe gewährt und/oder die angefragte Handlung oder Aktion ausgeführt wird und/oder die Alarmierung oder Sperrung nicht vorgenommen wird. Die vorbestimmte Abweichung liegt insbesondere bei einem Wert der einem Entfernungsunterschied von mehr als einem Meter, insbesondere mehr als zwei Metern, und/oder weniger als fünf Metern, insbesondere weniger als drei Metern entspricht. Dabei muss der Vergleich nicht nach Umrechnung in Entfernungen vorgenommen werden, sondern kann auch die Abweichung in anderen Einheiten vorbestimmt sein, die einen Vergleich ermöglichen.

Eine Umrechnung ist insbesondere möglich mittels des Zusammenhangs

$$\text{Phasenverschiebung} = 2\,Pi * (\text{Entfernung}) * \text{Frequenz} / c,$$

wobei zu beachten ist, dass ab einer gewissen Entfernung eine Mehrdeutigkeit zu berücksichtigen ist und c gleich der Lichtgeschwindigkeit ist

sowie mittels des Zusammenhangs

$$RTT = 2 * \text{Entfernung} / c.$$

Daraus folgt unter Vernachlässigung der Mehrdeutigkeit:

$$\text{Phasenverschiebung} \ = \ Pi * (RTT*c) * \text{Frequenz} \ / \ c$$

Und/oder

$$\text{dPhasenverschiebung}(f1,f2) \ = \ Pi * (RTT*c) * \text{dFrequenz}(f1,f2) \ / \ c.$$

Somit ergibt sich (wieder unter Darstellung der Mehrdeutigkeit):

$$\text{dPhasenverschiebung}(f1,f2)_{RT} / \ \text{dFrequenz}(f1,f2) \ = \ Pi * RTT$$

Dabei ist zu berücksichtigen, dass bei Entfernungen größer c/dFrequenz Mehrdeutigkeit entsteht. In den meisten Anwendungen lassen sich aber die Frequenzabstände so wählen, dass zumindest bei Entfernungen unter 150 Meter keine Mehrdeutigkeiten entstehen. Insbesondere wird/werden die mögliche Entfernung und/oder der Frequenzunterschied dFrequenz so gewählt, dass keine Mehrdeutigkeit entsteht bzw. diese vernachlässigt werden kann. Insbesondere ist die Entfernung kleiner der Lichtgeschwindigkeit geteilt durch den Frequenzunterschied der Messung der Phasenverschiebung, insbesondere mindestens um die Hälfte kleiner, insbesondere kleiner 300m, insbesondere kleiner 150m.

Dabei ist Phasenverschiebung(f1,f2)$_{RT}$ eine Phasenverschiebung zwischen den Übertragungen bei den Frequenzen f1 und f2 von einem Objekt zum anderen und zurück, die aufgrund der Entfernung auftritt. Sie kann näherungsweise gleichgesetzt werden mit dem Doppelten der Phasenverschiebung, die bei der Übertragung von einem Objekt zum anderen aufgrund der Entfernung auftritt. Dabei ist weiter dPhasenverschiebung(f1,f2) die ggf. korrigierte entfernungsbedingte Phasenverschiebungsdifferenz der bei der Frequenz f1 und der Frequenz f2 empfangenen Funksignale und dFrequenz deren Differenz und c die Lichtgeschwindigkeit. RTT ist die Signalrundlaufzeit von einem Objekt zum anderen und zurück. Anstelle der Akzeptanz des Mehrdeutigkeitsproblems kann man auch durch andere Methoden die Mehrdeutigkeit auflösen und durch Addition des ermittelten Korrekturterms zur Auflösung der Mehrdeutigkeit formulieren.

Die Signallaufzeit wird insbesondere bei einer oder mehreren Frequenz(en) im Bereich von 90% f1 bis 110% f2 bestimmt, wobei f1 kleiner ist als f2. Insbesondere liegen f1, f2 und f3 im Bereich von 1 GHz bis 10 GHz, insbesondere im Bereich von 2 MHz bis 6 GHz, insbesondere sind sie Frequenzen eines Bluetooth Kanals.

Erfindungsgemäß werden Ausgestaltungen, bei denen Veränderung der Phasenmessungen bei Änderung der Frequenz bzw. bei denen Veränderung der Phasenverschiebung, die auf Basis der Entfernung entsteht, bei Änderung der Frequenz, relativ zur Änderung der Frequenz mit der Signallaufzeitmessung verglichen werden. Oder anders ausgedrückt, besonders bevorzugt werden Veränderung der Phasenmessungen oder, insbesondere entfernungsbedingten, Phasenverschiebungen bei Änderung der Frequenz mit der Signallaufmessungen verglichen und dieser Vergleich für verschiedene Frequenzen durchgeführt und geprüft, ob diese Vergleiche zu Vergleichswerten führen, die innerhalb einer vorbestimmten oder aus Messungen an den Funksignalen bestimmten Spanne liegen oder eine vorbestimmte oder aus Messungen an den Funksignalen bestimmte Abweichung, insbesondere von einem vorbestimmten oder aus Messungen an den Funksignalen bestimmten Wert, überschreiten. Insbesondere wird bei Lage der Vergleichswerte außerhalb der Spanne oder des Intervalls oder bei Überschreiten der Abweichung ein Relayangriff als erkannt angenommen und/oder anderenfalls darauf geschlossen, dass kein Relayangriff vorliegt.

Die durch die Frequenzänderung bedingte oder die dadurch entstehende Änderung der Phasenverschiebung ist dadurch bedingt, dass bei, insbesondere näherungsweise gleicher Entfernung bei beiden Messungen, unterschiedlich viele Wellenzüge auf die Entfernung passen und dadurch die Phasenverschiebung, die durch die Entfernung bedingt ist, zwischen den Frequenzen unterschiedlich ausfällt. Diese Änderung der Phasenverschiebung auf Grund der Frequenz ist der durch die Frequenzänderung bedingte Phasenwechsel. Beim Messen ergeben sich dabei Probleme, denn die Phasenmessung ist jeweils abhängig von einer Referenz und kann auch beim Umschalten zum Senden der unterschiedlichen Frequenzen ein, häufig undefinierter, Phasensprung entstehen. Somit wird zum Senden, und insbesondere auch zum Empfangen, bevorzugt phasenkohärent, also mit einem Phasensprung von null, umgeschaltet. Es reicht aber auch aus, den Phasensprung zu ermitteln oder zu kennen. Dann kann man die durch die Frequenzänderung bedingte Phasenänderung bestimmen als die gemessene Phasenänderung korrigiert um den Phasensprung bei der Umschaltung des Senders und den Phasensprung beim Umschalten am Empfänger zur Messung der gemessenen Phasenänderung.

Der Vergleich kann dabei wie folgt erfolgen, indem ein Vergleichskoeffizient k ermittelt wird und geprüft wird, ob dieser in einer vorgegebenen Spanne als vorbestimmte Abweichung liegt.

$$\text{dPhasenverschiebung}(f1,f2) \ / \ \text{dFrequenz}(f1,f2) \ / \ RTT \ = \ k$$

Dies wird allerdings nicht bevorzugt, es wird vielmehr bevorzugt, ohne eine Verhältnisbildung zu arbeiten, sondern eine Differenz zu ermitteln und zu prüfen ob diese in einer vorbestimmten Spanne als vorbestimmte Abweichung liegt, also beispielsweise die Differenz zwischen der gemessenen Signallaufzeit (Pulssignallaufzeit, ToF) (in nur eine Richtung, also etwa 0,5 RTT) und dem Term

$$\text{dPhasenverschiebung}(f1,f2)/\ \text{dFrequenz}(f1,f2)\ /2\ /Pi$$

zu bilden und zu prüfen, ob das Ergebnis in einer vorgegebenen Spanne liegt. Selbstverständlich können auch Differenzen zu zwischen ähnlichen Ausdrücken gebildet werden, wie zwischen

$$\text{RTT} \times \text{Pi und dPhasenverschiebung}(f1,f2)/\ \text{dFrequenz}(f1,f2)$$

Dies erfolgt insbesondere der Art, dass die Veränderung zwischen den, um bei der Abstrahlung auftretenden Phasenänderungen korrigierten, empfangenen Phasenlagen bei zwei, insbesondere benachbarten, Frequenzen, insbesondere mit einem Frequenzunterschied von weniger als 5%, insbesondere weniger als 1 %, der niedrigeren Frequenz und/oder weniger als 17 MHz, insbesondere weniger als 10 MHz, insbesondere weniger als 9 MHz, insbesondere weniger als 2 MHz, bestimmt wird und deren Verhältnis mit der Signallaufzeit, zum Beispiel bei einer der Frequenzen oder gemittelte Signallaufzeit beider Frequenzen oder der Signallaufzeit bei einer ähnlichen Frequenz, insbesondere mit einem Frequenzunterschied von weniger als 5%, insbesondere weniger als 1 % der niedrigeren Frequenz und/oder weniger als 17 MHz, insbesondere weniger als 10 MHz, insbesondere weniger als 9 MHz, insbesondere weniger als 2 MHz, oder ähnlich, verglichen wird. Dies kann insbesondere durch Bilden eines Verhältnisses erfolgen. Dies kann zudem durch Division durch den Frequenzunterschied der Frequenzen der Phasenmessungen normiert werden. Wird dies bei mehreren Frequenzpaaren der Phasenmessung wiederholt, ergeben sich Schwankungen, die innerhalb eines vorbestimmten oder aus Messungen an den Funksignalen bestimmten Intervalls liegen müssen, um einen Relayangriff zu verneinen. Dies lässt sich beispielsweise so formulieren:

Für Signallauf nur in eine Richtung:

Delta_Phasenverschiebung(f1->f2) / Delta_Frequenz(f1- > f2) / Signallaufzeit(f3 ~ f1 |f2) = X(f1f2f3) (unter Vernachlässigung der Mehrdeutig- keit) Oder Delta_Phasenverschiebung(f1->f2) / Delta_Frequenz(f1- > f2) - 2 x Pi x Signallaufzeit(f3 ~ f1|f2) = X(f1f2f3) (unter Vernachlässigung der Mehr- deutigkeit) Oder Delta_Phasenverschiebung(f1->f2) / Delta_Frequenz(f1- > f2) + Mehrdeutigkeitskorrektur - 2 x Pi x Signallaufzeit (f3 ~ f1|f2) = X(f1f2f3)

Für Signalrundlauf:

Delta_Phasenverschiebung(f1->f2) / Delta_Frequenz(f1 - > f2) / Signalrundlaufzeit(f3 ~ f1|f2) = X(f1f2f3) (unter Vernachlässigung der Mehrdeutig- keit)

Oder

Delta_Ph$_a$$^s$enverschiebung(f1->f2) / Delta_Frequenz(f1 - > f2) - Pi x Signalrundlaufzeit(f3~ f1|f2) = X(f1f2f3) (unter Vernachlässigung der Mehrdeutig- keit) Oder Delta_Phasenverschiebung(f1->f2) / Delta _Frequenz(f 1- > f2) + Mehrdeutigkeitskorrektur - Pi x Signalrundlaufzeit(f3 ~ f1|f2) = X(f1f2f3)

Dabei ist Delta_Phasenverschiebung(f1->f2) die ggf. korrigierte (um bei der Abstrahlung auftretenden Phasenänderungen) entfernungsbedingte Phasenverschiebungsdifferenz der bei der Frequenz f1 und der Frequenz f2 empfangenen Funksignale und Delta_Frequenz(f1- > f2) die Differenz zwischen den Frequenzen f1 und f2 und ist Signallaufzeit(f3 ~ f1|f2) die einfache Signallaufzeit zwischen den Objekten bei einer zu f1 oder f2 ähnlichen Frequenz, wobei als ähnlich insbesondere alle Frequenzen die eine geringere Abweichung als plus oder minus 5%, insbesondere weniger als plus minus 2%, insbesondere weniger als plus minus 1 %, insbesondere weniger als plus minus 0,4%, von f1 oder f2 und/oder weniger als 17 MHz, insbesondere weniger als 10 MHz, insbesondere weniger als 2 MHz aufweisen. Unter einer Abweichung im Bereich von plus minus Y wird insbesondere eine Abweichung im Bereich von -Y bis +Y verstanden. X(f1f2f3) stellt dann den Vergleichswert für das Frequenztripel f1, f2, f3 dar, der innerhalb eines vorbestimmten oder aus Messungen an den Funksignalen bestimmten Intervalls liegen muss, um einen Relayangriff zu verneinen, bzw. bei dessen Lage außerhalb des Intervalls ein Relayangriff angenommen wird. Das Intervall kann durch Abweichung von einem Wert gegeben sein. Je kleiner die Unterschiede zwischen f1, f2 und f3 in X(f1f2f3) sind, desto genauer ist die Verfahrensführung, solange die verwendeten Mittel die Unterschiede ausreichend durch den Abstand von f1 und f2 aufzulösen zu vermögen. Je mehr unterschiedliche und an mit größerem Abstand im Frequenzband liegende Frequenztripel (mit möglichst ähnlichen (solange die verwendeten Mittel die Unterschiede ausreichend aufzulösen zu vermögen) Frequenzen f1, f2 und f3 im Frequenztripel) getestet werden, desto zuverlässiger ist die Erkennung. In der Praxis hat es sich bewährt, die Differenz zwischen den Frequenzen f1 und f2 mit mindestens 0,1MHz zu wählen. f3 kann auch gleich f1 oder f2 sein. Für die Laufzeitmessung können Signale der Phasenmessung wiederverwendet werden, sodass f3 vorteilhaft gleich f1 oder f2 ist oder mit zwei Signallaufzeiten an f1 und f2 gearbeitet und diese beispielsweise gemittelt werden. Diese können dann als Signallaufzeit(f3 = (f1 +f2)/2) angesehen werden.

Eine Korrektur der Phasenmessung am Empfänger ist insbesondere dann vorteilhaft, wenn am Sender und/oder Empfänger keine phasenkohärente Frequenzumschaltung ohne Phasensprung durchgeführt wird. Denn es kommt nicht auf die beim Empfang gemessene Phase an sich, sondern auf die entfernungsbedingte Phasenänderung an. In Delta_Phasenänderung(f1->f2) gehen also bevorzugt die beiden durch die Übertragung bedingten Phasenverschiebungen bei f1 und f2 ein. Aber auch andere Vergleiche sind möglich, sofern sie die Änderung der Phasenverschiebung des Funksignals über die Frequenzänderung mit der Signallaufzeit verglichen wird und dies an mehreren Frequenzen bzw. Frequenztripeln erfolgt. So können auch Entfernungen berechnet und verglichen werden. Auch ist es möglich, beispielsweise durch mehrere Messungen zeitversetzt auf einer gleichen Frequenz, Bewegungseffekte zu neutralisieren, insbesondere indem die Phasenmessungen gemittelt werden.

Mit Vorteil unterscheiden sich die Frequenzen der Funksignale, an denen Laufzeitmessungen vorgenommen werden, und Frequenzen der Funksignale, an denen Phasenmessungen vorgenommen werden nur unwesentlich, insbesondere werden die Laufzeitmessungen und Phasenmessungen an den gleichen Funksignalen vorgenommen. Insbesondere besteht zu mindestens der Hälfte der Frequenzen der Funksignale, an denen Laufzeitmessungen vorgenommen werden, mindestens ein Funksignal, das auch das gleich sein kann, dass eine Frequenz mit einer Abweichung von weniger als 5% aufweist, an dem eine Phasenmessung vorgenommen wird und/oder besteht zu mindestens der Hälfte der Frequenzen der Funksignale, an denen Phasenmessungen vorgenommen werden, mindestens ein Funksignal, das auch das gleich sein kann, dass eine Frequenz mit einer Abweichung von weniger als 5% aufweist, an dem eine Laufzeitmessungen vorgenommen wird. In einer solchen Ausgestaltung ist eine besonders zuverlässige Erkennung möglich.

Bevorzugt wird das Verfahren so geführt, dass die Funksignale eine erste Mehrzahl Funksignale umfassen und eine zweite Mehrzahl Phasenmessungen und eine dritte Mehrzahl Signallaufzeitmessungen vorgenommen werden, wobei die zweite Mehrzahl Signallaufmessungen an einer vierten Mehrzahl Signalen mit einer fünften Mehrzahl Frequenzen durchgeführt wird und die dritte Mehrzahl Signallaufmessungen an einer sechsten Mehrzahl Signalen mit einer siebten Mehrzahl Frequenzen durchgeführt wird und die Spanne der fünften Mehrzahl Frequenzen und die die Spanne der siebten Mehrzahl Frequenzen eine Überlappung in dem Frequenzintervall aufweisen und in diesem Frequenzintervall die Veränderung der zweiten Mehrzahl der Signallaufmessungen mit der Veränderung der dritten Mehrzahl der Signallaufmessungen oder der Veränderung verglichen wird. Auch in einer solchen Ausgestaltung ist eine besonders zuverlässige Erkennung möglich. Die dritte Mehrzahl liegt insbesondere im Bereich von 10 bis 150 und die zweite Mehrzahl insbesondere im Bereich 10 bis 300. Insbesondere werden im Bereich 10 bis 150 Phasenmessungspaare ermittelt. Dabei können, insbesondere in Bezug auf die Frequenz benachbarte Phasenmessungen als Paare betrachtet werden, wobei die Paare so aufgebaut sein können, dass Phasenmessungen Teil zweier Paare sind.

Insbesondere liegen die Frequenzen bei denen die Laufzeit- und/oder Phasenmessungen vorgenommen werden in einer Spanne von 25 bis 100 MHz, insbesondere überspannen Sie eine solche Spanne vollständig. Insbesondere liegen die Frequenzen im Bereich von 2 bis 6 GHz. Insbesondere liegt zwischen benachbarten für die Laufzeit- und/oder Phasenmessungen verwendeten Frequenzen ein Abstand im Bereich von 0,1 bis 10 MHz, insbesondere im Bereich von 0,5 bis 10 MHz.

Insbesondere wird jeweils eine Laufzeitmessung bei der Frequenz FI mit einer Phasenverschiebung zwischen den Frequenzen Fa und Fb verglichen, wobei insbesondere gilt Fa < = Fb und

Fa - 10MHz < = Fl < = Fa + 10 MHz und/oder F1 < = Fl < = F2

Insbesondere gilt auch Fa - 10MHz < = Fb < = Fa + 10 MHz

Die vorbestimmte Abweichung oder Spanne kann dabei konstant oder beispielsweise von den Frequenzen, beispielsweise der Summe oder dem Mittel der Frequenzen f1, f2, f3 bzw. Fa, Fb, Fl abhängig sein.

Es können auch mehrere Vergleiche durchgeführt und eine aggregierte Vergleichszahl bestimmt werden, die mit einer vorbestimmten Abweichung verglichen wird. So kann beispielsweise, der Mittelwert der Abweichung gebildet werden und dieser mit einer vorbestimmten Abweichung verglichen werden. Auch ist es möglich, die Größe der Überschreitung einer vorbestimmten Abweichung und die Unterschreitung oder Größe Nicht-Ausschöpfung mit umgekehrten Vorzeichen zu summieren und mit einer vorbestimmten Summenabweichung zu vergleichen. Auch ungleiche Gewichtungen bei einer Aggregation sind vorstellbar.

Mit besonderem Vorteil werden die phasenbasierten Messungen und/oder Laufzeitmessungen zur Entfernungsmessung verwendet, dadurch lassen sich auch andere Angriffe erkennen, andere Funktionen umsetzen und die Funksignale effizient nutzen.

Bevorzugt werden die Signallaufzeiten und/oder Signallaufzeitänderungen mit der Veränderung von Phasenlagen und/oder Phasenlagenänderungen verglichen.

Bevorzugt wird es, die Anzahl der Phasenmessungen und/oder der Laufzeitmessungen im Frequenzintervall und/oder die Anzahl der Frequenzen, an denen Phasenmessungen und/oder Laufzeitmessungen im Frequenzintervall vorgenommen werden, mindestens mit fünf zu wählen.

Mit Vorteil wird das Verfahren mit mehreren ersten Objekten und einem gemeinsamen zweiten Objekt durchgeführt. Dabei kann insbesondere das gemeinsame zweite Objekt ein Authentifizierungsmittel, wie elektronischer Schlüssel, zum Beispiel Keyfob, darstellen. Dies erhöht die Zuverlässigkeit der Erkennung und erschwert die Täuschung des Systems.

Bevorzugt werden die die Signallaufzeitmessungen und die Phasenmessungen zeitgleich, insbesondere die bei ähnlichen Frequenzen oder die in Verhältnis gesetzten innerhalb von 100 ms, insbesondere innerhalb von 10 ms und/oder an denselben Funksignalen vorgenommen werden. Dies erhöht die Genauigkeit und die Robustheit gegenüber Bewegung und Umgebungseinflüssen. Dabei können die Messungen an verschiedenen Frequenzen mit größerem zeitlichem Abstand durchgeführt werden.

Besonders bevorzugt wird es, die zweite Mehrzahl gleich dritten Mehrzahl und/oder die vierte Mehrzahl gleich der sechsten Mehrzahl und/oder die fünfte Mehrzahl gleich der siebten Mehrzahl und/oder die vierte Mehrzahl Funksignale gleich der sechsten Mehrzahl Funksignale ist und/oder die fünfte Mehrzahl Frequenzen gleich der siebten Mehrzahl Frequenzen zu wählen.

Ein Funksignal wird von einem anderen insbesondere dadurch abgegrenzt, dass es eine andere Frequenz aufweist. Insbesondere weisen Funksignale untereinander Frequenzunterschiede auf, die größer sind als die Frequenzstabilität der beteiligten Hardware.

Mit weiterem Vorteil, insbesondere um die Vergleiche zu vereinfachen und noch robuster zu gestalten, wird der der Wechsel zwischen mindestens zwei, insbesondere allen, der fünften Mehrzahl Frequenzen und/oder zwischen mindestens zwei, insbesondere allen, der siebten Mehrzahl Frequenzen phasenkohärent durchgeführt. Bevorzugt werden alle Frequenzwechsel mindestens eines der Objekte phasenkohärent durchgeführt. Mit etwas geringerem Vorteil aber dennoch vorteilhaft werden die beim Frequenzwechsel auftretenden Phasenverschiebungen, insbesondere am Sender und/oder Empfänger, gemessen und zur Korrektur der Phasenmessungen verwendet.

Mit Vorteil wird das Verfahren so geführt, dass Laufzeitmessungen und/oder Phasenmessungen an Funksignalen und/oder Funksignale mit einer Leistung unterhalb einer vorbestimmten und/oder, insbesondere aus oder unter Berücksichtigung empfangener Funksignale, ermittelten Leistungsuntergrenze empfangene Funksignale unberücksichtigt bleiben, insbesondere solche Funksignale unberücksichtigt bleiben, die mehr als 50% unter der mittleren Leistung der empfangenen Funksignale liegen und/oder wobei Laufzeitmessungen und/oder Phasenmessungen an Funksignalen und/oder Funksignale mit einer Leistung oberhalb einer vorbestimmten und/oder, insbesondere aus oder unter Berücksichtigung empfangener Funksignale, ermittelten Leistungsobergrenze empfangene Funksignale unberücksichtigt bleiben, insbesondere solche Funksignale unberücksichtigt bleiben, die mehr als 50% oberhalb der mittleren Leistung der empfangenen Funksignale liegen.

Anders gesprochen, wird es bevorzugt, wenn die Messungen mit geringer Empfangsleistung, insbesondere einer Empfangsleistung unterhalb eines vorbestimmten Werts oder Anteil der mittleren oder maximalen Empfangsleistung, nicht berücksichtigt werden und/oder die Messungen mit sehr hoher Empfangsleistung, insbesondere einer Empfangsleistung oberhalb eines vorbestimmten Werts oder Anteil der mittleren oder maximalen Empfangsleistung, nicht berücksichtigt werden. Durch derartige Ausgestaltungen lässt sich das Verfahren besonders robust ausgestalten.

Bevorzugt beträgt die Breite des Frequenzintervalls mindestens 0,1 MHz und/oder maximal 100 MHz und/oder beträgt der Frequenzabstand zwischen zwei aufeinander folgenden der unterschiedlichen Frequenzen mindestens 0,1

EP 4 078 215 B1

MHz und/oder maximal 10 MHz und/oder wird es bevorzugt, wenn die unterschiedlichen Frequenzen mindestens fünf Frequenzen und/oder maximal 200 Frequenzen darstellen und/oder wobei die Funksignale auf den unterschiedlichen Frequenzen nacheinander und/oder aufeinanderfolgend, insbesondere unmittelbar aufeinanderfolgend, abgestrahlt werden und/oder wobei die Bandbreite der Funksignale zu keiner Zeit 50 MHz, insbesondere 25 MHz, übersteigt.

Mit besonderem Vorteil wird das Verfahren mit einer weiteren Erfindung kombiniert verwandt. So sind oder werden die zwei Objekte bevorzugt auf 10ns oder besser zeit- und/oder taktsynchronisiert und strahlt das erste und/oder zweite der zwei Objekte auf mehreren Frequenzen die Funksignale ab und empfängt das zweite und/oder erste der zwei Objekte diese Signale, wobei zur Erkennung eines Relayangriffs nur die Signale des ersten Objekts oder die Signale des zweiten Objekts verwendet werden und das Verfahren die Entscheidung beinhaltet, ob die Signale des ersten oder des zweiten Objekts verwendet werden, insbesondere auf Basis mindestens je einer Abschätzung oder Bestimmung von Auswirkungen von Störungen auf den Empfang an beiden Objekten.

Zwar ist es bekannt, Zeitgeber in zwei Objekten zu synchronisieren, sowohl über kabelgebundene als auch kabellose Verbindungen. So existiert beispielsweise das NTP Protokoll. Auch ist im Rahmen einer Bluetoothverbindung eine Synchronisation vorgesehen, in der jedes Objekt eine freilaufende 28 Bit Uhr mit einem Takt von 3,2 kHz aufweist und jedes Objekt sein Offset zu einer Zentralen Uhr ermittelt und diesen regelmäßig korrigiert. Hier wird eine Synchronisation mit einer Genauigkeit von etwa 125 ns erreicht. Auch ist eine verbesserte Zeitsynchronisation bekannt, beispielsweise aus der DE112014004426T5 oder "Synchronization in Wireless Sensor Networks Using Bluetooth", Casas et al., Third International Workshop on Intelligent Solutions in Embedded Systems, 2005., ISBN: 3-902463-03-1. Dies kann beispielsweise zur Energieeinsparung genutzt werden, indem ein Objekt nur zu bestimmten Zeitschlitzen empfangsbereit gehalten wird, die dem anderen Objekt bekannt sind, um zu entsprechenden Zeiten zu senden. Die Synchronisation der Uhren ist auch zumindest bei einseitiger relativ starker Störung des Funkkanals noch möglich, wobei die Entfernungsmessung bei derartigen Störungen unmöglich oder sehr ungenau wird oder sehr viel Zeit benötigt. Doch ist von der Genauigkeit einer Zeitsynchronisation von der Synchronisation auf einen Takt eines empfangenen Signals am Empfänger des Signals zu unterscheiden. Hier findet keine Synchronisation zweier Uhren an zwei Objekten statt, sondern wird das empfangene Objekt so eingestellt, dass es mit dem eingehenden Signal synchronisiert ist. Dabei spielt die Signallaufzeit keine Rolle, da dafür unbeachtlich ist, wann das Signal gesendet wurde und/oder wie lange es zur Übertragung benötigt hat.

Dabei kann nur das erste Objekt senden und das zweite Objekt die Signale des ersten empfangen oder das zweite Objekt senden und das erste Objekt die Signale des zweiten empfangen. Auch kann beides, insbesondere zeitlich nacheinander oder abwechselnd, kombiniert werden.

Eine derartige Verfahrensführung trägt zur Beschleunigung der Bestimmung des Abstandes und/oder zur Erhöhung der Genauigkeit der Bestimmung des Abstandes zwischen zwei Objekten auch bei Störung des Empfangs eines der beiden Objekte bei. Denn dazu kann es wünschenswert sein, die Abstandsbestimmung unter weitgehendem Verzicht auf die Funksignale einer Übertragungsrichtung durchzuführen. Der Erfinder hat überraschend festgestellt, dass zwischen zeit- und/oder taktsynchronisierten Objekten, insbesondere bei phasenkohärent Frequenzwechsel, der Verzicht auf eine Übertragungsrichtung möglich ist. Dies sorgt für eine schnellere Messung, da auch Umschaltzeiten der Transceiver weitgehend verzichtet werden kann und ermöglicht die Entfernungsbestimmung auch bei einseitiger starker Störung des Funkkanals.

Gekennzeichnet ist eine Ausführung der Erfindung dadurch, dass zur Bestimmung des Relayangriffs nur die Signale, die das erste Objekt gesendet hat, oder (ausschließliches oder) die Signale, die das zweite Objekt gesendet hat, verwendet werden.

Dabei sind sowohl Ausführungen möglich, bei denen nur das erste Objekt sendet als auch solche, bei denen nur das zweite Objekt sendet, als auch solche, bei denen beide Senden aber nur ein Teil der Signale, nämlich die vom ersten Objekt oder (ausschließliches oder) die vom zweiten Objekt gesendeten, zur Abstandsbestimmung verwendet werden.

Das Verfahren beinhaltet bevorzugt die Entscheidung, ob die Signale des ersten oder zweiten Objekts verwendet werden, insbesondere auf Basis mindestens je einer Abschätzung oder Bestimmung von Auswirkungen von Störungen auf den Empfang an beiden Objekten. Diese Entscheidung kann vor oder nach dem Senden der Signale oder nach dem Senden eines Teils erfolgen.

Sofern die Geschwindigkeit gesteigert werden soll, ist es bevorzugt, die Entscheidung möglichst frühzeitig zu treffen und das Senden nicht verwendeter Signale möglichst gering zu halten, insbesondere nach der Entscheidung solche nicht mehr zu senden. Soll das Verfahren möglichst störungsunanfällig ausgestaltet sein, wird die Entscheidung erst nach Senden der Signale des ersten und der Signale des zweiten Objekts gefällt. Gesendete und empfangene Signale können zur Fällung der Entscheidung verwendet werden. Dazu können aber alternativ oder zusätzlich auch andere Daten oder Messungen verwendet werden, wie beispielsweise das Rauschen oder verfahrensfremde Signale am Empfänger.

Gewählt werden insbesondere die Funksignale des ersten oder (ausschließliches oder) des zweiten Objekts, deren Empfang am jeweils anderen der zwei Objekte weniger gestört war, ist oder voraussichtlich sein wird.

Mit besonderem Vorteil wechselt das erste und/oder zweite Objekt zwischen mindestens zwei der mehreren Frequenzen phasenkohärent oder wird ein beim Umschalten entstehender Phasensprung am umschaltenden Objekt gemessen und bei der Berechnung berücksichtigt. Dadurch lässt sich eine noch robustere und einfachere Verfahrensführung aber auch Entfernungsmessung umsetzen und lassen sich weitere Vorteile bei der Verwendung der Signale dadurch realisieren, dass darauf beruhende Auswertungen vereinfacht werden. Beispielsweise kann bei Kenntnis des Zeitpunktes des phasenkohärenten Wechsels oder des Wechsels mit gemessenem Phasensprung am sendenden Objekt und bei Bestimmung des Wechsels im empfangenen Signal am empfangenen Objekt die Zeit zwischen Senden und Empfang des Wechsels bestimmt werden, die die Signallaufzeit (ToF) darstellt, und auch die Phasenverschiebung bestimmt werden. Aus der Signallaufzeit lässt sich mittels der Lichtgeschwindigkeit direkt die Entfernung bestimmten. Über die Phasenverschiebung ist dies, jedoch modulo der Wellenlänge, ebenfalls möglich. Durch Nutzung mehrerer Frequenzen lässt sich die Mehrdeutigkeit bei der phasenbasierten Messung reduzieren. Durch die Kombination der signallaufzeit- und phasenbasierten Messungen lässt sich eine besonders genaue und robuste Entfernungsmessung realisieren.

Unter phasenkohärentem Umschalten oder Wechsel zwischen zwei Frequenzen wird insbesondere verstanden, dass der Zeitpunkt des Umschaltens genau bestimmt ist oder gemessen wird und die Phase nach der Umschaltung relativ zur Phasenlage vor der Umschaltung bekannt ist. Dies ist der Fall, wenn die Veränderung der Phase beim Umschalten null ist oder einen vorbekannten Wert beträgt.

Hilfsweise kann auch der beim Umschalten entstehende Phasensprung, insbesondere lokal, also insbesondere vor dem Senden bzw. betreffend den Empfänger am Empfänger, gemessen und vor und/oder beim Vergleich herausgerechnet und/oder korrigiert werden.

Bekannt sein kann der Phasenunterschied oder -sprung beim Wechsel zwischen Frequenzen beispielsweise dadurch, dass er vorbestimmt ist oder aus anderen bekannten Größen, beispielsweise der Dauer einer, insbesondere unmittelbar, vorausgehenden Abstrahlung bei einer Frequenz, ableitbar ist.

Der Phasenunterschied entsteht beim Umschalten zwischen zwei Frequenzen in der Regel, aus technischen Gründen, kann aber auch vermieden werden. Dabei kann das Umschalten zwischen zwei Frequenzen mit kurzer Unterbrechung oder unterbrechungsfrei durchgeführt werden. Zum Zeitpunkt des unterbrechungsfreien Wechsels springt die Phase bzw. während des Wechselns mit Unterbrechung springt die Phase der gedacht in die Unterbrechung fortgedachten Signale vor und nach dem Umschalten. Zu dem Wechselzeitpunkt ohne Unterbrechung oder zu einem gedachten Wechselzeitpunkt in der Unterbrechung, insbesondere in der Mitte der Unterbrechung und/oder am Ende des Signals vor der Unterbrechung oder am Beginn des Signals nach der Unterbrechung, liegt ein definierter Phasensprung vor. Dieser ist der Phasenunterschied.

Mit besonderem Vorteil wird auch am empfangenen Objekt und/oder zum Empfang phasenkohärent umgeschaltet, insbesondere zwischen den unterschiedlichen Frequenzen. Insbesondere schalten also erstes und zweites Objekt zwischen Frequenzen phasenkohärent um. Dies erfolgt insbesondere durch phasenkohärentes Umschalten mindestens einer PLL am ersten und/oder zweiten Objekt. Insbesondere sind die Objekte entsprechend eingerichtet.

Es wurde zudem überraschend festgestellt, dass die aus der hier beschriebenen einseitigen Entfernungsmessung gewonnene Entfernungen bei der Verwendung handelsüblicher Transceiver wie z.B. der schon etwas ältere cc2500 oder der aktuelle cc26xx von Texas Instruments oder der Kw35/36/37/38 von NXP oder der DA1469x von Dialog nicht nur abhängig sind von der zur Entfernungsbestimmung verwendeten Frequenz, sondern auch zu errechneten Entfernungen unterhalb der tatsächlichen Entfernung führen können, dies aber nur bei solchen Frequenzen, deren Übertragungskanal stark gedämpft ist, sodass diese problemlos bei dem Vergleich eliminiert werden können.

Somit ist es vorteilhaft bei der Verfahrensführung die Funksignale mit unterschiedlichen Frequenzen, teilweise nicht zu nutzen und zwar, solche Anteile nicht zu nutzen, die unterhalb einer Leistungsuntergrenze liegen.

Auch hat es sich herausgestellt solche Anteile nicht zu nutzen, die oberhalb einer Leistungsobergrenze liegen.

Diese Grenzen können vorbestimmt sein oder aus den empfangenen Signalen bestimmt werden und insbesondere oberhalb bzw. unterhalb der mittleren Empfangenen Leistung liegen und zwar insbesondere mindestens 20% oberhalb der mittleren Empfangsleistung (Leistungsobergrenze) und/oder mindestens 20% unterhalbe der mittleren Empfangsleistung (Leistungsuntergrenze) liegen.

Bevorzugt werden Signalanteile bei Frequenzen mit weniger als 40% oder zumindest Signale mit weniger als 20%, insbesondere weniger als 40%, der mittleren Energie der Signale und/oder Signale mit mehr als 140%, insbesondere mehr als 120%, der mittleren Energie empfangen wurden, nicht berücksichtigt.

Mit Vorteil liegt die Leistungsuntergrenze im Bereich von 5 bis 50% der mittleren Leistung der empfangenen Signale und/oder die Leistungsobergrenze im Bereich von 120 bis 200% der mittleren Leistung der empfangenen Signale

In einer anderen Ausgestaltung werden die x% der Signale mit kleinster empfangener Amplitude aussortiert und nicht verwendet und/oder die y% der Signale mit größter empfangener Amplitude aussortiert und nicht verwendet. Als besonders vorteilhaft hat es sich erwiesen, wenn die Summe aus x und y 10 nicht unterschreitet und/oder 75 nicht überschreitet und/oder x im Bereich von 10 bis 75 und/oder y im Bereich von 20 bis 50 liegt. Mit diesen Werten lässt sich in den meisten Situationen eine hohe Genauigkeit und eine zuverlässige Erkennung erreichen.

Mit Vorteil sendet das zweite oder (ausschließliches oder) erste Objekt keine Signale zur Entfernungsbestimmung und/oder sendet das zweite oder das erste Objekt (ausschließliches oder) Signale nur zur Zeit- und/oder Taktsynchronisation. Dadurch lässt sich Energie und Verfahrenszeit einsparen.

Bevorzugt sendet das erste und/oder zweite oder jedes der zwei Objekte die Signale auf mehreren Frequenzen nacheinander und/oder aufeinanderfolgend, insbesondere unmittelbar aufeinanderfolgend. Insbesondere werden beim Senden durch erstes und zweites Objekt zunächst alle Signale des ersten oder zweiten Objekts und anschließend die des anderen gesendet. Dadurch lassen sich unter anderem Einflüsse von Umgebungs- oder Entfernungsänderungen und von Bewegungen eines oder beider Objekte reduzieren.

Mit Vorteil übersteigt die Bandbreite der Signale zu keiner Zeit 50 MHz, insbesondere 25 MHz. Dadurch lässt sich Energie einsparen, Störungen anderer Prozesse vermeiden und gegenüber breitbandigen Verfahren einfache Bauteile nutzen.

Bevorzugt wird vor, nach und/oder während der Durchführung des Verfahrens mindestens eine Zeit- und/oder Taktsynchronisation und/oder -korrektur zwischen den zwei Objekten durchgeführt. Dies erhöht die Genauigkeit des Verfahrens. Bevorzugt wird auch eine Drift der Uhr des ersten und/oder zweiten Objekts oder ein Unterschied in der Drift der Uhr des ersten und des zweiten Objekts bestimmt und bei der Abstandsbestimmung berücksichtigt. Dies erhöht die Genauigkeit des Verfahrens.

Vorteilhafterweise werden die Signale über mehrere Antennenpfade übertragen, insbesondere mit mehreren Antennen, insbesondere nacheinander, am sendenden Objekt gesendet und/oder mit mehreren Antennen am empfangenen Objekt empfangen.

Mit besonderem Vorteil wird bei Erkennen eines Relayangriffs ein Zugang oder eine Freigabe verwehrt, eine angefragte Handlung oder Aktion nicht vorgenommen und/oder eine Alarmierung oder Sperrung vorgenommen und/oder bei nichtErkennen eines Relayangriffs der Zugang oder die Freigabe gewährt und/oder die angefragte Handlung oder Aktion ausgeführt und/oder die Alarmierung oder Sperrung nicht vorgenommen.

Gelöst wird die Aufgabe auch durch ein oder zwei Objekte, jeweils eingerichtet mit Sende- und Empfangsmitteln und einer Steuerung, eingerichtet zur Durchführung des erfindungsgemäßen Verfahrens.

Mit Vorteil sind die Objekte Teile eines Datenübertragungssystems, insbesondere eines Bluetooth, WLAN oder Mobilfunk Datenübertragungssystems. Bevorzugt sind die Funksignale Signale des Datenübertragungssystems, insbesondere eines Datenübertragungsstandards, beispielsweise Mobilfunkstandard, WLAN oder Bluetooth, die zur Datenübertragung gemäß des Datenübertragungsstandards genutzt werden.

Gelöst wird die Aufgabe auch durch die Verwendung der Veränderung von Phasenmessungen gegenüber von Signallaufmessungen oder deren Veränderung zwischen zwei Objekten, wobei die Phasenmessungen und Signallaufzeitmessungen an Signalen mit überlappenten Frequenzbandbreiten vorgenommen werden zur Erkennung eines Relayangriffs.

Gelöst wird die Aufgabe auch durch ein Zugangssystem zur Gewährung und/oder Verweigerung eines Zugangs, eingerichtet zur Durchführung des erfindungsgemäßen Verfahrens und zur Gewährung und/oder Verweigerung basierend auf der verfahrensgemäßen Erkennung.

Die Auswertung erfolgt beispielsweise wie folgt:
Für zwei dicht beieinander liegende Frequenzen f1 und f2, z.B. 2410MHz und 2411MHz wird jeweils die Phasensumme für die Übertragung vom ersten Objekt zum zweiten und wieder zum ersten Objekt bestimmt.

Dann ist die Differenz dieser Phasensummen geteilt durch den Unterschied der beiden Frequenzen direkt proportional zur Entfernung, die das Funksignal für den Hin- und Rückweg benötigt hat und somit auch zur Signallaufzeit.

Wenn nun auch jeweils eine ToF Messung auf beiden Frequenzen durchgeführt wird, so wird sich die Zeit auf beiden Frequenzen nicht groß unterscheiden oder ist gar identisch und ist ebenfalls direkt proportional zur Entfernung, die das Funksignal für den Hin- und Rückweg benötigt hat. Somit kann diese Signallaufzeit mit der Phasenänderung, insbesondere dividiert durch den Frequenzunterschied, verglichen werden, beispielsweise ins Verhältnis gesetzt werden und geprüft werden, ob dieses Verhältnis in einem oder außerhalb eines vorbestimmten oder bestimmten Intervalls liegt.

Man kann aber auch die Entfernung basierend auf der Laufzeit und basierend auf der Phasendifferenz bestimmten und wenn diese mehr als eine vorbestimmte oder bestimmte Abweichung aufweisen, einen Relayangriff als erkannt ansehen, beispielsweise, wenn die berechneten Entfernungen um 2m oder mehr voneinander abweichen.

In diesem Beispiel kann beispielsweise durch Zurückschalten auf die erste Frequenz eine weitere Phasendifferenz gewonnen werden, die die Bewegung mit gleichem Anteil enthält, aber die Entfernung mit negativem Vorzeichen. Beide Phasendifferenzen subtrahiert und durch zwei geteilt eliminieren die Bewegung. Mit diesem Ergebnis kann dann wieder wie mit der ursprünglichen Messung weitergearbeitet werden.

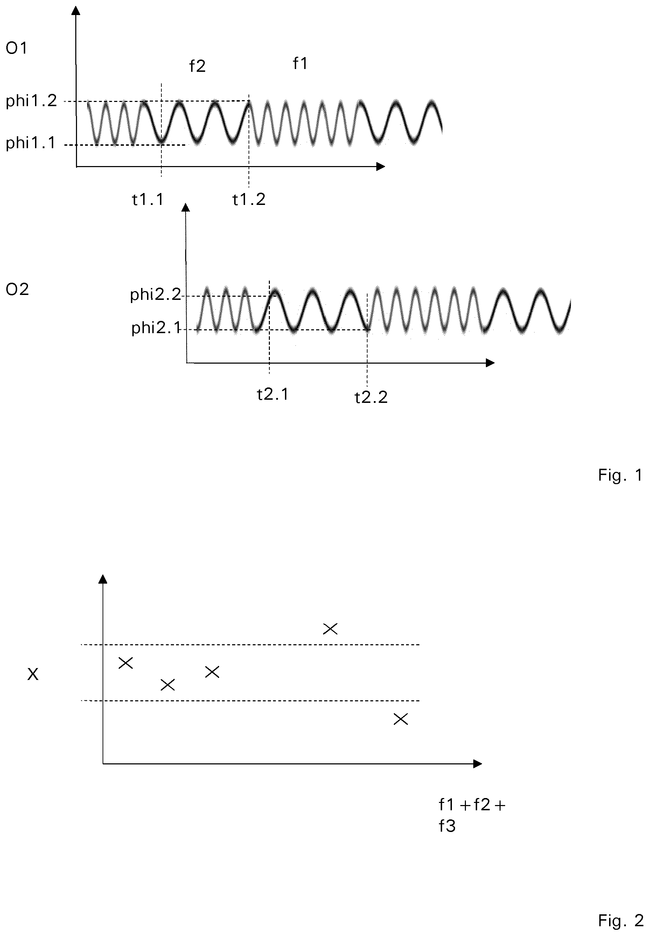

Fig. 1 und Fig. 2 veranschaulichen eine mögliche Ausführung der Erfindung rein schematisch exemplarisch und nicht beschränkend.

Figur 1 zeigt für die zwei Objekte O1 und O2 jeweils die Phase des von Objekt 01 zu Objekt O2 übertragenen Funksignals gegenüber der Zeit am jeweiligen Objekt. Gezeigt ist eine Veranschaulichung einer kontinuierlichen Sinuswelle mit phasenkohärentem Frequenzwechsel ohne Phasensprung, die vom Objekt 1 zum Objekt 2 gesendet wird. Werden am ersten Objekt die Phasen phi1.1 und phi1.2 beim Frequenzwechsel bestimmt oder sind diese bekannt und trifft dies auch für die Zeiten des Frequenzwechsel t1.1 und t1.2 und ist der Zeitversatz zwischen den Uhren der Objekte O1 und O2, t1 und t2 bekannt und werden die Zeitpunkte des Empfangs des Frequenzwechsels t2.1 und t2.2 und die dann vorliegenden Phasen phi2.1 und ph2.2 bestimmt, lassen sich mit den Frequenzen f1 und f2 einfach die oben beschriebenen Berechnungen anstellen und beispielsweise X(f1f2f3), zum Beispiel mit f3 = f1 bestimmen.

Figur 2 zeigt solche Werte für X aufgetragen gegen eine beliebige Achse, beispielsweis eine Zeitachse oder eine Achse, die die Summe oder das Mittel der Frequenzen f1, f2, f3 angibt. Gestrichelt gekennzeichnet ist auch ein Intervall. Liegt X in dem Intervall, wird kein Relayangriff erkannt, weicht X von diesem Intervall ab, wird ein Relayangriff erkannt, was bei den zwei rechten Werten für X der Fall ist.

## Patentansprüche

1. Verfahren zur Erkennung eines Relayangriffs, wobei zwischen einem ersten und einem zweiten Objekt (O1, O2) Funksignale mit unterschiedlichen Frequenzen (f1, f2, f3) übertragen werden, wobei zwischen den unterschiedlichen Frequenzen zum Senden und Empfangen der Frequenzen umgeschaltet wird, und an diesen Funksignalen mit unterschiedlichen Frequenzen Phasenmessungen vorgenommen werden und wobei diese mit einer Referenz verglichen werden und wobei bei einer Überschreitung einer vorbestimmten oder aus Messungen an den Funksignalen bestimmten Abweichung ein Relayangriff angenommen wird, ein Zugang oder eine Freigabe verwehrt wird, eine angefragte Handlung oder Aktion nicht vorgenommen und/oder eine Alarmierung oder Sperrung vorgenommen wird und/oder wobei bei Unterschreitung der vorbestimmten oder aus Messungen, insbesondere Signallaufzeitmessungen, bestimmten Abweichung das Nichtvorhandensein eines Relayangriff angenommen wird, der Zugang oder die Freigabe gewährt und/oder die angefragte Handlung oder Aktion ausgeführt wird und/oder die Alarmierung oder Sperrung nicht vorgenommen wird, **dadurch gekennzeichnet, dass** an den Funksignalen auch mindestens eine Signallaufzeitmessung vorgenommen wird, und dass die Veränderung der Phasenmessungen zwischen unterschiedlichen der Frequenzen relativ zur Frequenzänderung der Frequenzen beim Umschalten zwischen den Frequenzen mit der mindestens einen Signallaufzeitmessung oder deren Veränderung als Referenz verglichen wird, wobei das Umschalten phasenkohärent erfolgt oder ein aus dem Umschalten resultierender Phasensprung bekannt ist oder ermittelt wird und die gemessene Phasenänderung um den Phasensprung korrigiert wird oder wobei die Veränderung der Phasenmessungen zwischen unterschiedlichen der Frequenzen solche zwischen den Übertragungen bei den Frequenzen von einem Objekt zum anderen und zurück sind.

2. Verfahren nach Anspruch 1, wobei die Spanne der Frequenzen der Funksignale, an denen Signallaufzeitmessungen vorgenommen werden, und die Spanne der Frequenzen der Funksignale, an denen Phasenmessungen vorgenommen werden, eine Überlappung in einem Frequenzintervall aufweisen und in diesem Frequenzintervall die Veränderung der Phasenmessungen relativ zur Frequenzänderung, mit den Signallaufzeitmessungen oder deren Veränderung als Referenz verglichen wird.

3. Verfahren nach Anspruch 2, wobei die Funksignale eine erste Mehrzahl Funksignale umfassen und eine zweite Mehrzahl Phasenmessungen und eine dritte Mehrzahl Signallaufzeitmessungen vorgenommen werden, wobei die zweite Mehrzahl Phasenmessungen an einer vierten Mehrzahl Signalen mit einer fünften Mehrzahl Frequenzen durchgeführt wird und die dritte Mehrzahl Signallaufzeitmessungen an einer sechsten Mehrzahl Signalen mit einer siebten Mehrzahl Frequenzen durchgeführt wird und die Spanne der fünften Mehrzahl Frequenzen und die die Spanne der siebten Mehrzahl Frequenzen eine Überlappung in dem Frequenzintervall aufweisen und in diesem Frequenzintervall die Veränderung der zweiten Mehrzahl der Phasenmessungen mit der Veränderung der dritten Mehrzahl der Signallaufzeitmessungen oder der Veränderung verglichen wird.

4. Verfahren Anspruch 3, wobei die zweite Mehrzahl gleich der dritten Mehrzahl und/oder die vierte Mehrzahl gleich der sechsten Mehrzahl und/oder die fünfte Mehrzahl gleich der siebten Mehrzahl und/oder die vierte Mehrzahl Funksignale gleich der sechsten Mehrzahl Funksignale ist und/oder die fünfte Mehrzahl Frequenzen gleich der siebten Mehrzahl Frequenzen ist und/oder wobei die zweite Mehrzahl Phasenmessungen und die dritte Mehrzahl Signallaufzeitmessungen an den gleichen der ersten Mehrzahl Funksignale vorgenommen wird und/oder wobei die zweite Mehrzahl Phasenmessungen und die dritte Mehrzahl Signallaufzeitmessungen an der ersten Mehrzahl Funksignale vorgenommen werden, wobei, insbesondere jeweils, eine Gruppe aus einer Phasendifferenzmessung bestimmt aus der zweiten Mehrzahl Phasenmessungen und einer Signallaufzeit- oder Signallaufzeitänderungsmessung der oder bestimmt aus der dritten Mehrzahl für den Vergleich verwendet werden, wobei die Frequenzen der Funksignale, an denen die Messungen einer Gruppe vorgenommen werden untereinander eine geringere Abweichung als 5%, insbesondere weniger als 2%, insbesondere weniger als 1 %, insbesondere weniger als 0,4%, der höchsten Frequenz im Paar und/oder weniger als 17 MHz, insbesondere weniger als 9 MHz, insbesondere weniger als 2 MHz, aufweisen und/oder die Messungen eines Paar mit einem zeitlichen Abstand von weniger als 100 ms, insbesondere weniger als 10 ms, vorgenommen werden.

5. Verfahren nach einem der vorstehenden Ansprüche, wobei aus je zwei Phasenmessungen bei unterschiedlichen Frequenzen (F1, F2, Fa, Fb), insbesondere unter Verwendung einer Mehrdeutigkeitskorrektur, eine erste Entfernung zwischen dem ersten und zweiten Objekt und/oder ein erster zur Entfernung zwischen dem ersten und zweiten Objekt proportionaler Wert und aus der Signallaufzeitmessung, insbesondere bei einer Frequenz (F3, FI), eine zweite Entfernung, insbesondere modulo dem Eindeutigkeitsintervall der Phasenmessungen, zwischen dem ersten und zweiten Objekt und/oder ein zweiter zur Entfernung zwischen dem ersten und zweiten Objekt proportionaler Wert bestimmt wird und als Vergleich die Differenz der ersten und zweiten Entfernung oder die Differenz des ersten und zweiten Werts bestimmt wird, wobei die Proportionalität des ersten und zweiten Werts insbesondere identisch sind und/oder aus erstem und zweitem Wert jeweils durch die gleiche Rechenoperation die Entfernung ermittelbar ist.

6. Verfahren nach einem der vorstehenden Ansprüche, wobei die phasenbasierten Messungen und/oder Signallaufzeitmessungen zur Entfernungsmessung verwendet werden und/oder wobei die Signallaufzeiten und/oder Signallaufzeitänderungen mit der Veränderung von Phasenlagen und/oder Veränderung der Phasenlagenänderungen verglichen werden.

7. Verfahren nach einem der vorstehenden Ansprüche 2, 3, oder 4, wobei die Anzahl der Phasenmessungen und/oder der Signallaufzeitmessungen im Frequenzintervall und/oder die Anzahl der Frequenzen, an denen Phasenmessungen und/oder Signallaufzeitmessungen im Frequenzintervall vorgenommen werden, mindestens fünf beträgt und/oder wobei das Verfahren mit mehreren ersten Objekten und einem gemeinsamen zweiten Objekt durchgeführt wird und/oder wobei die Signallaufzeitmessungen und die Phasenmessungen zeitgleich oder innerhalb von 100ms, insbesondere 10ms, und/oder an denselben Funksignalen vorgenommen werden.

8. Verfahren nach einem der vorstehenden Ansprüche 3 bis 7, wobei der Wechsel zwischen mindestens zwei der fünften Mehrzahl Frequenzen und/oder zwischen mindestens zwei der siebten Mehrzahl Frequenzen phasenkohärent erfolgt und/oder die beim Frequenzwechsel auftretende Phasenverschiebung gemessen und zur Korrektur der Phasenmessungen verwendet wird.

9. Verfahren nach einem der vorstehenden Ansprüche, wobei Signallaufzeitmessungen und/oder Phasenmessungen an Funksignalen und/oder Funksignale mit einer Leistung unterhalb einer vorbestimmten und/oder, insbesondere aus oder unter Berücksichtigung empfangener Funksignale, ermittelten Leistungsuntergrenze empfangene Funksignale unberücksichtigt bleiben, insbesondere solche Funksignale unberücksichtigt bleiben, die mehr als 50% unter der mittleren Leistung der empfangenen Funksignale liegen und/oder wobei Signallaufzeitmessungen und/oder Phasenmessungen an Funksignalen und/oder Funksignale mit einer Leistung oberhalb einer vorbestimmten und/oder, insbesondere aus oder unter Berücksichtigung empfangener Funksignale, ermittelten Leistungsobergrenze empfangene Funksignale unberücksichtigt bleiben, insbesondere solche Funksignale unberücksichtigt bleiben, die mehr als 50% oberhalb der mittleren Leistung der empfangenen Funksignale liegen.

10. Verfahren nach einem der vorstehenden Ansprüche, wobei die Messungen mit geringer Empfangsleistungen, insbesondere Empfangsleistung unterhalb eines vorbestimmten Werts oder Anteils der mittleren oder maximalen Empfangsleistung, nicht berücksichtigt werden.

11. Verfahren nach einem der vorstehenden Ansprüche 2 bis 10, wobei die Breite des Frequenzintervalls mindestens 0,1 MHz und/oder maximal 100 MHz beträgt und/oder wobei der Frequenzabstand zwischen zwei aufeinander folgenden der unterschiedlichen Frequenzen mindestens 0,1 MHz und/oder maximal 10 MHz beträgt und/oder die unterschiedlichen Frequenzen mindestens fünf Frequenzen und/oder maximal 200 Frequenzen darstellen und/oder wobei die Funksignale auf den unterschiedlichen Frequenzen nacheinander und/oder aufeinanderfolgend, insbesondere unmittelbar aufeinanderfolgend, abgestrahlt werden und/oder wobei die Bandbreite der Funksignale zu keiner Zeit 50 MHz, insbesondere 25 MHz, übersteigt.

12. Verfahren nach einem der vorstehenden Ansprüche, wobei die zwei Objekte auf 10ns oder besser zeit- und/oder taktsynchronisiert sind und wobei das erste und/oder zweite der zwei Objekte auf mehreren Frequenzen Signale abstrahlt und das zweite und/oder erste der zwei Objekte diese Signale empfängt wobei zur Erkennung eines Relayangriffs nur die Signale des ersten Objekts oder die Signale des zweiten Objekts verwendet werden und das Verfahren die Entscheidung beinhaltet, ob die Signale des ersten oder des zweiten Objekts verwendet werden, insbesondere auf Basis mindestens je einer Abschätzung oder Bestimmung von Auswirkungen von Störungen auf den Empfang an beiden Objekten.

13. Zugangssystem zur Gewährung und/oder Verweigerung eines Zugangs, eingerichtet zur Durchführung eines Verfahrens zur Erkennung eines Relayangriffs nach einem der Ansprüche 1 bis 12.

14. Zugangssystem nach dem vorstehenden Anspruch, eingerichtet, aus je zwei Phasenmessungen eine erste Entfernung zwischen dem ersten und zweiten Objekt und/oder einen ersten zur Entfernung zwischen dem ersten und zweiten Objekt proportionalen Wert und aus der Signallaufzeitmessung eine zweite Entfernung zwischen dem ersten und zweiten Objekt und/oder einen zweiten zur Entfernung zwischen dem ersten und zweiten Objekt proportionalen Wert zu bestimmen und als Vergleich die Differenz der ersten und zweiten Entfernung oder die Differenz des ersten und zweiten Werts zu bestimmen, wobei die Proportionalität des ersten und zweiten Werts insbesondere identisch ist und/oder aus erstem und zweitem Wert jeweils durch die gleiche Rechenoperation die Entfernung ermittelbar ist.

**Claims**

1. Procedure for the detection of a relay attack, wherein radio signals with different frequencies (f1, f2, f3) are transmitted between a first and a second object (O1, O2), wherein switching is carried out between the different frequencies for transmitting and receiving the frequencies, and phase measurements are carried out on these radio signals with different frequencies and wherein these are compared with a reference and wherein a relay attack is assumed if a predetermined deviation or a deviation determined from measurements on the radio signals is exceeded, access or authorisation is denied, a requested action or action is not carried out and/or an alarm or blocking is carried out and/or the absence of a relay attack is assumed if the deviation falls below the predetermined deviation or deviation determined from measurements, in particular signal propagation time measurements, the access or the release is granted and/or the requested action or action is carried out and/or the alarming or blocking is not carried out, **characterised in that** at least one signal propagation time measurement is also carried out on the radio signals, and **in that** the change in the phase measurements between different of the frequencies relative to the frequency change of the frequencies when switching between the frequencies is compared with the at least one signal propagation time measurement or its change as a reference, wherein the switching is phase coherent or a phase jump resulting from the switching is known or determined and the measured phase change is corrected by the phase jump or wherein the change in the phase measurements between different ones of the frequencies are those between the transmissions at the frequencies from one object to the other and back.

2. Procedure according to claim 1, wherein the range of frequencies of the radio signals at which signal propagation time measurements are made and the range of frequencies of the radio signals at which phase measurements are made have an overlap in a frequency interval and in this frequency interval the change in the phase measurements relative to the frequency change is compared with the signal propagation time measurements or their change as a reference.

3. Procedure according to claim 2, wherein the radio signals comprise a first plurality of radio signals and a second plurality of phase measurements and a third plurality of signal propagation time measurements are performed, wherein the second plurality of phase measurements is performed on a fourth plurality of signals having a fifth plurality of frequencies and the third plurality of signal delay measurements is performed on a sixth plurality of signals having a seventh plurality of frequencies and the span of the fifth plurality of frequencies and the span of the seventh plurality of frequencies have an overlap in the frequency interval and in this frequency interval the change in the second plurality of phase measurements is compared with the change in the third plurality of signal delay measurements or the change.

4. Procedure according to claim 3, wherein the second plurality is equal to the third plurality and/or the fourth plurality is equal to the sixth plurality and/or the fifth plurality is equal to the seventh plurality and/or the fourth plurality of radio signals is equal to the sixth plurality of radio signals and/or the fifth plurality of frequencies is equal to the seventh plurality of frequencies and/or wherein the second plurality of phase measurements and the third plurality of signal propagation time measurements are made on the same of the first plurality of radio signals and/or wherein the second plurality of phase measurements and the third plurality of signal propagation time measurements are made on the first plurality of radio signals, wherein, in particular in each case, a group of a phase difference measurement determined from the second plurality of phase measurements and a signal propagation time or signal propagation time change measurement of the or determined from the third plurality are used for the comparison, wherein the frequencies of the radio signals on which the measurements of a group are made deviate from one another by less than 5%, in particular less than 2%, in particular less than 1%, in particular less than 0.4%, of the highest frequency in the pair and/or less than 17 MHz, in particular less than 9 MHz, in particular less than 2 MHz, and/or the measurements of a pair are made with a time interval of less than 100 ms, in particular less than 10 ms.

5. Procedure according to one of the preceding claims, wherein a first distance between the first and second object and/or a first value proportional to the distance between the first and second object is determined from two phase measurements at different frequencies (F1, F2, Fa, Fb), in particular using an ambiguity correction, and a second distance, in particular modulo the uniqueness interval of the phase measurements, is determined from the signal propagation time measurement, in particular at a frequency (F3, F1), between the first and second objects and/or a second value proportional to the distance between the first and second objects is determined and the difference between the first and second distances or the difference between the first and second values is determined as a comparison, wherein the proportionality of the first and second values is in particular identical and/or the distance can be determined from the first and second values in each case by the same arithmetic operation.

6. Procedure according to one of the preceding claims, wherein the phase-based measurements and/or signal propagation time measurements are used for distance measurement and/or wherein the signal propagation times and/or signal propagation time changes are compared with the change of phase positions and/or change of phase position changes.

7. Procedure according to one of the preceding claims 2, 3, or 4, wherein the number of phase measurements and/or the number of signal delay measurements in the frequency interval and/or the number of frequencies at which phase measurements and/or signal delay measurements are made in the frequency interval is at least five and/or wherein the Procedure is carried out with several first objects and a common second object and/or wherein the signal delay measurements and the phase measurements are made simultaneously or within 100ms, in particular 10ms, and/or on the same radio signals.

8. Procedure according to one of the preceding claims 3 to 7, wherein the change between at least two of the fifth plurality of frequencies and/or between at least two of the seventh plurality of frequencies is phase-coherent and/or the phase shift occurring during the frequency change is measured and used to correct the phase measurements.

9. Procedure according to one of the preceding claims, wherein signal propagation time measurements and/or phase measurements on radio signals and/or radio signals with a power below a predetermined and/or, in particular from or taking into account received radio signals, received radio signals are not taken into account, in particular such radio signals are not taken into account, which are more than 50% below the average power of the received radio signals and/or whereby signal propagation time measurements and/or phase measurements on radio signals and/or radio signals with a power above a predetermined upper power limit and/or radio signals determined in particular from or taking into account received radio signals are not taken into account, in particular radio signals which are more than 50% above the average power of the received radio signals are not taken into account.

10. Procedure according to one of the preceding claims, wherein the measurements with low received power, in particular received power below a predetermined value or proportion of the average or maximum received power, are not taken into account.

11. Procedure according to one of the preceding claims 2 to 10, wherein the width of the frequency interval is at least 0.1 MHz and/or at most 100 MHz and/or wherein the frequency spacing between two successive ones of the different frequencies is at least 0.1 MHz and/or at most 10 MHz and/or the different frequencies represent at least five frequencies and/or at most 200 frequencies and/or wherein the radio signals are emitted on the different frequencies one after the other and/or successively, in particular immediately after one another, and/or wherein the bandwidth of the radio signals does not exceed 50 MHz, in particular 25 MHz, at any time.

12. Procedure according to one of the preceding claims, wherein the two objects are time and/or clock synchronised to 10ns or better and wherein the first and/or second of the two objects emits signals on several frequencies and the second and/or first of the two objects receives these signals, wherein only the signals of the first object or the signals of the second object are used to detect a relay attack and the Procedure comprises deciding whether the signals of the first or the second object are used, in particular on the basis of at least one estimation or determination of effects of interference on the reception at both objects.

13. An access system for granting and/or denying access, adapted to perform a Procedure for the detection of a relay attack according to any one of claims 1 to 12.

**14.** Access system according to the preceding claim, arranged to determine a first distance between the first and second object and/or a first value proportional to the distance between the first and second object from each of two phase measurements and a second distance between the first and second object and/or a second value proportional to the distance between the first and second object from the signal propagation time measurement and to determine the difference between the first and second distance or the difference between the first and second value as a comparison, wherein the proportionality of the first and second value is in particular identical and/or the distance can be determined from the first and second value in each case by the same arithmetic operation.

**Revendications**

**1.** Procédure de détection d'une attaque de relais, dans laquelle des signaux radio de différentes fréquences (f1, f2, f3) sont transmis entre un premier et un deuxième objet (O1, O2), dans laquelle une commutation est effectuée entre les différentes fréquences pour la transmission et la réception des fréquences, et dans laquelle des mesures de phase sont effectuées sur ces signaux radio de différentes fréquences et dans laquelle celles-ci sont comparées à une référence et dans laquelle une attaque par relais est supposée si un écart prédéterminé ou un écart déterminé à partir de mesures sur les signaux radio est dépassé, l'accès ou l'autorisation est refusé, une action ou une action demandée n'est pas exécutée et/ou une alarme ou un blocage est exécuté et/ou l'absence d'attaque par relais est supposée si l'écart est inférieur à l'écart prédéterminé ou à l'écart déterminé à partir de mesures, en particulier de mesures du temps de propagation des signaux, l'accès ou la libération est accordé et/ou l'action demandée ou l'action est exécutée et/ou l'alarme ou le blocage n'est pas exécuté, **caractérisée en ce qu'**au moins une mesure du temps de propagation du signal est également effectuée sur les signaux radio, et **en ce que** le changement observés dans les mesures de phase entre différentes fréquences par rapport au changement de fréquence des fréquences lors de la commutation entre les fréquences est comparé à ladite au moins une mesure du temps de propagation du signal ou à son changement en tant que référence, dans laquelle la commutation est cohérente en phase ou un saut de phase résultant de la commutation est connu ou déterminé et le changement de phase mesuré est corrigé par le saut de phase ou dans laquelle le changement observé dans les mesures de phase entre les différentes fréquences est celui entre les transmissions aux fréquences d'un objet à l'autre et vice-versa.

**2.** Procédure selon la revendication 1, dans laquelle la gamme de fréquences des signaux radio pour lesquels des mesures du temps de propagation du signal sont effectuées et la gamme de fréquences des signaux radio pour lesquels des mesures de phase sont effectuées se chevauchent dans un intervalle de fréquence et, dans cet intervalle de fréquence, la variation des mesures de phase par rapport à la variation de fréquence est comparée aux mesures du temps de propagation du signal ou à leur variation en tant que référence.

**3.** Procédure selon la revendication 2, dans laquelle les signaux radio comprennent une première pluralité de signaux radio et une deuxième pluralité de mesures de phase et une troisième pluralité de mesures de temps de propagation des signaux sont effectuées, dans laquelle la deuxième pluralité de mesures de phase est effectuée sur une quatrième pluralité de signaux ayant une cinquième pluralité de fréquences et la troisième pluralité de mesures de retard de signal est effectuée sur une sixième pluralité de signaux ayant une septième pluralité de fréquences et la portée de la cinquième pluralité de fréquences et la portée de la septième pluralité de fréquences ont un chevauchement dans l'intervalle de fréquence et dans cet intervalle de fréquence le changement observé dans la deuxième pluralité de mesures de phase est comparé au changement observé dans la troisième pluralité de mesures de retard de signal ou au changement.

**4.** Procédure selon la revendication 3, dans laquelle la deuxième pluralité est égale à la troisième pluralité et/ou la quatrième pluralité est égale à la sixième pluralité et/ou la cinquième pluralité est égale à la septième pluralité et/ou la quatrième pluralité de signaux radio est égale à la sixième pluralité de signaux radio et/ou la cinquième pluralité de fréquences est égale à la septième pluralité de fréquences et/ou dans laquelle la deuxième pluralité de mesures de phase et la troisième pluralité de mesures de temps de propagation de signal sont effectuées sur la même de la première pluralité de signaux radio et/ou dans laquelle la deuxième pluralité de mesures de phase et la troisième pluralité de mesures de temps de propagation de signal sont effectuées sur la première pluralité de signaux radio, dans laquelle, en particulier dans chaque cas, un groupe d'une mesure de différence de phase déterminée à partir de la deuxième pluralité de mesures de phase et d'une mesure de temps de propagation du signal ou d'une mesure de changement de temps de propagation du signal ou déterminée à partir de la troisième pluralité sont utilisées pour la comparaison, dans laquelle les fréquences des signaux radio sur lesquels les mesures d'un groupe sont effectuées s'écartent les unes des autres de moins de 5 %, en particulier de moins de 2 %, en particulier de moins de 1 %, en particulier de moins de 0.4 % de la fréquence la plus élevée de la paire et/ou moins de 17 MHz, en particulier moins de 9 MHz, en particulier moins de 2 MHz, et/ou les mesures d'une paire sont effectuées avec un intervalle de temps de moins de 100 ms, en particulier moins de 10 ms.

5. Procédure selon l'une des revendications précédentes, dans laquelle on détermine une première distance entre le premier et le deuxième objet et/ou une première valeur proportionnelle à la distance entre le premier et le deuxième objet à partir de deux mesures de phase à des fréquences différentes (F1, F2, Fa, Fb), notamment en utilisant une correction d'ambiguïté, et on détermine une deuxième distance, notamment modulo l'intervalle d'unicité des mesures de phase, à partir de la mesure du temps de propagation du signal, notamment à une fréquence (F3, F1), entre le premier et le deuxième objet et/ou une deuxième valeur proportionnelle à la distance entre le premier et le deuxième objet est déterminée et la différence entre la première et la deuxième distance ou la différence entre la première et la deuxième valeur est déterminée à titre de comparaison, la proportionnalité de la première et de la deuxième valeur étant en particulier identique et/ou la distance pouvant être déterminée à partir de la première et de la deuxième valeur dans chaque cas par la même opération arithmétique.

6. Procédure selon l'une des revendications précédentes, dans laquelle les mesures fondées sur la phase et/ou les mesures du temps de propagation du signal sont utilisées pour mesurer la distance et/ou dans laquelle les temps de propagation du signal et/ou les changements de temps de propagation du signal sont comparés aux changements de positions de phase et/ou aux changements de positions de phase.

7. Procédure selon l'une des revendications précédentes 2, 3 ou 4, dans laquelle le nombre de mesures de phase et/ou le nombre de mesures de retard de signal dans l'intervalle de fréquence et/ou le nombre de fréquences auxquelles les mesures de phase et/ou les mesures de retard de signal sont effectuées dans l'intervalle de fréquence est d'au moins cinq et/ou dans laquelle la procédure est exécutée avec plusieurs premiers objets et un deuxième objet commun et/ou dans laquelle les mesures de retard de signal et les mesures de phase sont effectuées simultanément ou dans un délai de 100 ms, en particulier 10 ms, et/ou sur les mêmes signaux radioélectriques.

8. Procédure selon l'une des revendications précédentes 3 à 7, dans laquelle le changement entre au moins deux de la cinquième pluralité de fréquences et/ou entre au moins deux de la septième pluralité de fréquences est cohérent en phase et/ou le déphasage se produisant pendant le changement de fréquence est mesuré et utilisé pour corriger les mesures de phase.

9. Procédure selon l'une des revendications précédentes, dans laquelle les mesures de temps de propagation des signaux et/ou les mesures de phase sur les signaux radio et/ou les signaux radio dont la puissance est inférieure à une limite de puissance prédéterminée et/ou, en particulier à partir ou en tenant compte des signaux radio reçus, les signaux radio reçus ne sont pas pris en compte, en particulier de tels signaux radio ne sont pas pris en compte, qui sont inférieurs de plus de 50 % à la puissance moyenne des signaux radio reçus et/ou par lesquels les mesures de temps de propagation des signaux et/ou les mesures de phase sur les signaux radio et/ou les signaux radio dont la puissance est supérieure à une limite supérieure de puissance prédéterminée et/ou les signaux radio déterminés en particulier à partir des signaux radio reçus ou en tenant compte de ceux-ci ne sont pas pris en considération, en particulier les signaux radio qui sont supérieurs de plus de 50 % à la puissance moyenne des signaux radio reçus ne sont pas pris en considération.

10. Procédure selon l'une des revendications précédentes, dans laquelle les mesures à faible puissance reçue, en particulier la puissance reçue inférieure à une valeur ou à une proportion prédéterminée de la puissance reçue moyenne ou maximale, ne sont pas prises en compte.

11. Procédure selon l'une des revendications précédentes 2 à 10, dans laquelle la largeur de l'intervalle de fréquence est d'au moins 0,1 MHz et/ou d'au plus 100 MHz et/ou dans laquelle l'espacement de fréquence entre deux fréquences successives est d'au moins 0,1 MHz et/ou d'au plus 10 MHz et/ou les différentes fréquences représentent au moins cinq fréquences et/ou au plus 200 fréquences et/ou dans laquelle les signaux radio sont émis sur les différentes fréquences l'une après l'autre et/ou successivement, en particulier immédiatement l'une après l'autre, et/ou dans laquelle la largeur de bande des signaux radio n'excède pas 50 MHz, en particulier 25 MHz, à tout moment.

12. Procédure selon l'une des revendications précédentes, dans laquelle les deux objets sont synchronisés avec le temps et/ou l'horloge à 10ns ou mieux et dans laquelle le premier et/ou le deuxième des deux objets émet des signaux sur plusieurs fréquences et le deuxième et/ou le premier des deux objets reçoit ces signaux, dans laquelle seuls les signaux du premier objet ou les signaux du deuxième objet sont utilisés pour détecter une attaque de relais et le procédure comprend la décision d'utiliser les signaux du premier ou du deuxième objet, en particulier sur la base d'au moins une estimation ou détermination des effets de l'interférence sur la réception dans les deux objets.

13. Système d'accès permettant d'accorder et/ou de refuser l'accès, adapté à l'exécution d'une Procédure de détection d'une attaque de relais selon l'une des revendications 1 à 12.

14. Système d'accès selon la revendication précédente, agencé pour déterminer une première distance entre le premier et le deuxième objet et/ou une première valeur proportionnelle à la distance entre le premier et le deuxième objet à partir de chacune des deux mesures de phase et une deuxième distance entre le premier et le deuxième objet et/ou une deuxième valeur proportionnelle à la distance entre le premier et le deuxième objet à partir de la mesure du temps de propagation du signal et pour déterminer la différence entre la première et la deuxième distance ou la différence entre la première et la deuxième valeur à titre de comparaison, la proportionnalité de la première et de la deuxième valeur est en particulier identique et/ou la distance peut être déterminée à partir de la première et de la deuxième valeur dans chaque cas par la même opération arithmétique.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3564703 A1

- DE 112014004426 T5

**In der Beschreibung aufgeführte Nicht-Patentliteratur**

- **CASAS et al.** Synchronization in Wireless Sensor Networks Using Bluetooth. *Third International Workshop on Intelligent Solutions in Embedded Systems*, 2005, ISBN 3-902463-03-1